# EUROPEAN PATENT APPLICATION

(11) **EP 1 349 142 A2**
(43) Date of publication of application: **01.10.2003**
(21) Application number: 03251224.6
(22) Date of filing: 28.02.2003
(51) Int. Cl.: G09G 5/00

(54) **Method and apparatus for displaying moving images on a display device**

(30) Priority: 23.03.2002 KR 2002015905
(71) Applicant: SAMSUNG ELECTRONICS CO., LTD., Suwon-City, Kyungki-do (KR)
(72) Inventor: Roh, Ui-chol, Suwon-si, Gyeonggi-do (KR)
(74) Representative: Robinson, Ian Michael

(57) **Abstract**

A method of transmitting a control signal to highlight a highlighting region (50) is provided. The method includes receiving a first window handle for a moving image reproducing program (23); comparing the first window handle with a second window handle for a moving image reproducing program that is to be highlighted; outputting coordinates of the second window handle when the first and second window handles are the same; and outputting control values for controlling red (R), green (G), blue (B) video signals, contrast, or sharpness of a region that is formed with coordinates of the second window handle.

## Description

The present invention relates to a method and apparatus displaying moving images on a display device, a method of sending a control signal for displaying moving images, and a recording medium for recording the method.

In general, a television is designed to display moving images, whereas a computer monitor is designed to display text images. In other words, low-resolution images are displayed well on a television and high-resolution images are displayed well on a computer monitor.

Extensive research has been performed on the development of various multimedia contents, such as texts, pictures, moving images, and games, to be displayed on a computer monitor. However, the existing computer monitors are designed to display text images whose contrast and sharpness are lower than moving images on screens of televisions. Thus, the existing computer monitors are not designed to be appropriate for displaying moving images. For clear moving images, the existing computer monitors need to increase the contrast and sharpness of moving images. However, with the existing computer monitors, it is difficult to exactly control the sharpness and contrast so that moving images are displayed at a desired level. In addition, a great increase in the contrast and sharpness of a moving image on a computer monitor having a color display tube (CDT) results in physical damages to the CDT. For these reasons, the existing computer monitors are not capable of appropriately controlling the sharpness and contrast of moving images and thus cannot effectively display these moving images.

An aim of the present invention is to display moving images well on a display device such as a high resolution computer monitor. An aim of preferred embodiments of the present invention is to provide a method and apparatus for displaying moving images clearly on a computer monitor, and ideally without physical damage to the computer monitor.

According to the present invention there is provided an apparatus and method as set forth in the appended claims. Preferred features of the invention will be apparent from the dependent claims, and the description which follows.

The present invention provides a method of automatically detecting and highlighting a region in which a moving image is to be displayed, and a method of controlling the details of the region, such as its contrast.

Also, the present invention provides a method of sending a control signal to highlight a highlighting region and a recording medium therefor.

In one aspect of the present invention there is provided a method of transmitting a control signal to highlight a highlighting region, the method including receiving a first window handle for a moving image reproducing program; comparing the first window handle with a second window handle for a moving image reproducing program that is to be highlighted; outputting coordinates of the second window handle when the first and second window handles are the same; and outputting control values for controlling red (R), green (G), blue (B) video signals, contrast, or sharpness of a region that is formed with coordinates of the second window handle.

When comparing the first and second window handles, a class name of the first window handle is compared with a class name of the second window handle. The method may be recorded as a program that can be executed by a computer, and stored in a computer-readable recording medium.

In another aspect of the present invention there is provided a method of highlighting a highlighting region, in which a moving image is to be reproduced, in a highlight mode, the method including receiving coordinates of a moving image corresponding to the highlighting region; and receiving control values for each controlling R,G,B video signals, contrast or sharpness of the highlighting region and controlling the R,G,B video signals, contrast or sharpness of the highlighting region of the highlighting region.

In yet another aspect of the present invention, there is provided a method of controlling the luminance of a highlighting region, the method including receiving moving image window coordinates corresponding to a highlighting region in which a moving image is to be reproduced; and receiving control values for increasing the luminance of the highlighting region and automatically increasing the luminance of the highlighting region to be brighter than the luminance of the other regions.

In a further aspect of the present invention, there is provided a display device including a control circuit for receiving moving image coordinates for setting a highlighting region, in which a moving image is to be reproduced, in a highlight mode, and control values that are each used to control R,G,B video signals, contrast, or sharpness; and a cathode display tube for displaying the R,G,B video signals adjusted in response to signals output from the control circuit.

For a better understanding of the invention, and to show how embodiments of the same may be carried into effect, reference will now be made, by way of example, to the accompanying diagrammatic drawings in which:
Figure 1 is a view of a preferred embodiment of a computer system according to the present invention;
Figure 2 is a view of a monitor screen where a region, in which a moving image is displayed, is displayed according to the present invention; and
Figure 3 is a flow chart explaining a method of automatically detecting and highlighting a region in which a moving image is to be displayed, and a method of controlling the details of the region, e.g., its contrast, according to the present invention.

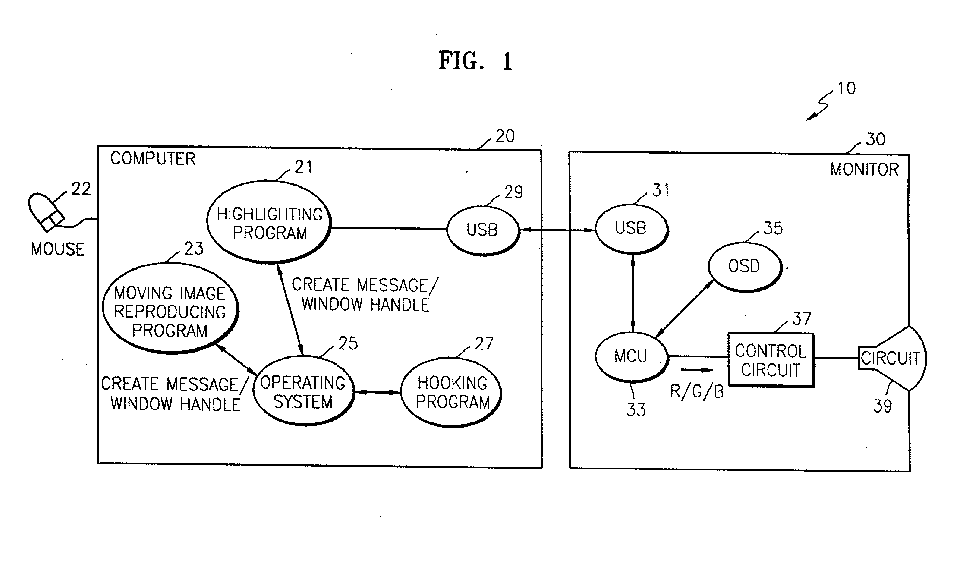

Figure 1 is a view of a computer system 10 used in a preferred embodiment of the present invention. The computer system 10 includes a computer 20 and a monitor 30. The computer 20 includes a highlighting program 21, a mouse 22, a moving image reproducing program 23, an operating system (OS) 25, a hooking program 27, and a universal serial bus (USB) port 29.

The monitor 30 includes a USB port 31, a main control unit (MCU) 33, an on-screen display (OSD) 35, a control circuit 37, and a color display tube (CDT) 39.

Running the highlighting program 21 detects a region, in which a predetermined moving image is reproduced, when the moving image reproducing program 23 reproduces the predetermined moving image. The highlighting program 21 then increases the brightness of the region, and sends the contrast, sharpness, and control values for adjusting red (R), green (G), and blue (B) video signals to the control circuit 37.

With the highlighting program 21, it is also possible to calculate coordinates of a region, in which a moving image is reproduced (hereinafter, referred to as "moving image window coordinates"), and output the calculated coordinates to the monitor 30 via the USB ports 29 and 31 which are predetermined interfaces.

Here, the word "highlighting" is to control or adjust the contrast, sharpness, and R,G,B video signals with respect to a region, in which a moving image is reproduced, via the moving image reproducing program 23. The "highlighting region" is a region to be highlighted and set with coordinates obtained by the MCU 33, which correspond to the moving image window coordinates.

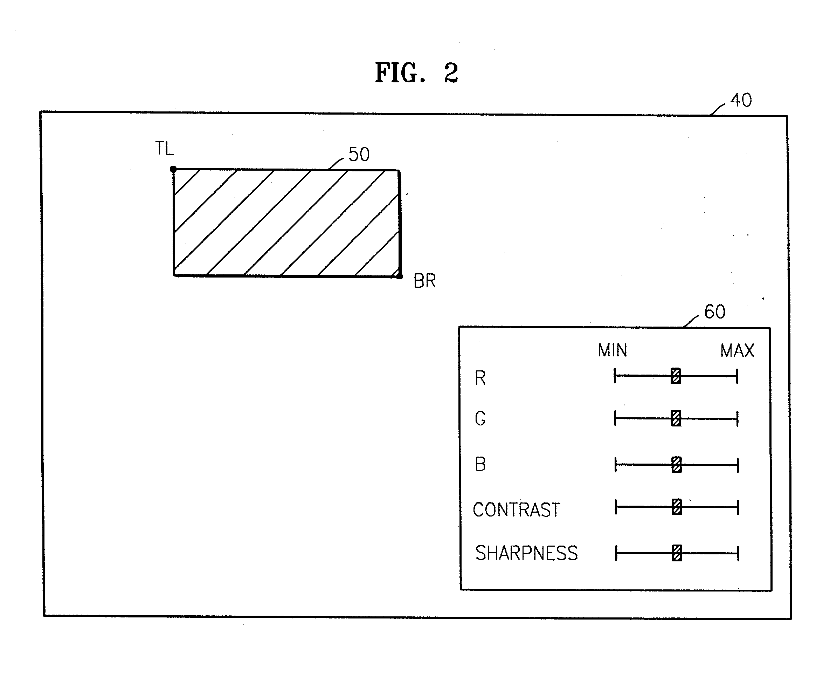

As one example, the mouse 22 is used to control the size of a region in which a moving image is reproduced, i.e., increase or reduce the size of the region, and move the position of the region by dragging or clicking the region. Further, it is possible to adjust the levels of the contrast, sharpness, and R,G,B video signals on a control window 60 shown in Figure 2, such as using the mouse 22.

The moving image reproducing program 23 is a predetermined program, such as Windows Media Player or Real Player, that reproduces moving images.

The OS 25 takes overall control and manages the computer system 10 and further generates a create message for the highlighting program 21 and the moving image reproducing program 23 when running these programs.

The hooking program 27 hooks a window handle with respect to the moving image reproducing program 23 and sends the hooked window handle to the highlighting program 21.

The USB port 29 sends moving image window coordinates output from the highlighting program 21 and control values for highlighting a highlighting region to the MCU 33 via the USB port 31. In this embodiment, a USB port is adopted as an interface, but any interface unit, e.g., a serial port and a parallel port, may be used to exchange the moving image window coordinates and the control values between the computer 20 and the monitor 30.

The MCU 33 receives the moving image window coordinates and control values via the USB port 31, calculates coordinates from the moving image window coordinates to set a highlighting region corresponding to the resolution of the screen of the monitor 30 or the CDT 39, and processes the control values for highlighting the set highlighting region.

In other words, the MCU 33 controls the operations of the control circuit 37 in response to the predetermined control signals, i.e., the control values, output from the USB port 31.

Also, the MCU 33 controls the operations of the control circuit 37 in response to the moving image window coordinates output from the OSD 35 and the control values for highlighting the highlighting region.

The control circuit 37 controls image video signals, which consist of R,G,B video signals, in the highlighting region in response to signals output from the OSD 35. That is, in response to the control values output from the MCU 33, the control circuit 37 adjusts the contrast, sharpness, R,G,B video signals and luminance of the highlighting region in which a moving image is reproduced.

Accordingly, a user can call an adjusting dialog on a menu and highlight the highlighting region.

If the highlighting program is run by the user, i.e., the highlighting program is in a highlighting mode, to highlight a highlighting region, terminated and run again, the highlighting region is displayed with the control values that were set before the termination of the program. Advantageously, the highlighting program automatically generates the highlighting region and sets control values according to a user preference for moving images, each time moving images are reproduced.

In other words, running a player program, such as Windows Media Player by Microsoft Corp., that uses moving image reproducing modules, activates the highlighting program 21 in order to detect a region, in which a moving image is reproduced, and increase the luminance of the region.

Also, the user can adjust the contrast, sharpness, R,G,B video signals, or luminance with respect to the region in which a moving image is reproduced, using the control window 60.

The highlighting program 21 or the OSD 35 controls the contrast, sharpness, and R,G,B video signals of the region in which a moving image is reproduced.

The OSD 35 controls the size and position of the region, in which a moving image is reproduced, and adjusts the levels of contrast, sharpness, and the R,G,B video signals on the control window 60.

The CDT 39 receives signals output from the control circuit 37 and displays a highlighted moving image. Here, the CDT 39 may be replaced with a liquid crystal display (LCD) device or a plasma display panel (PDP) device.

The control circuit 37 receives moving image window coordinates for setting a highlighting region to reproduce a moving image in the highlighting mode and control values for adjusting the contrast, sharpness, and R,G,B video signals with respect to the highlighting region.

The CDT 39 displays the R,G,B video signals, contrast, and sharpness that are adjusted in response to the signals output from the control circuit 37.

Figure 2 is a view of a monitor screen 40 that displays a region 50, in which a moving image is displayed, and a control window 60.

The region 50 is set with coordinates of a highlighting region that are converted by the MCU 33 of Figure 1 to be displayed on the CDT 39. The position of the region 50 is determined by the top-left coordinates TL and the bottom-right coordinates BR.

The control window 60 is displayed on the monitor screen 40 when an adjustment dialogue is called on a menu and displays the R,G,B video signals, contrast, and sharpness of the region 50.

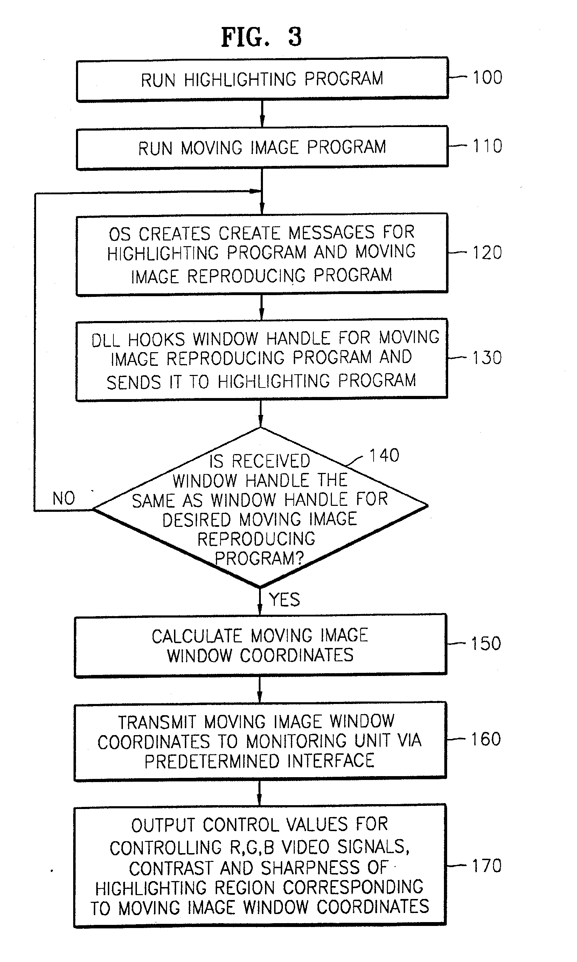

Figure 3 is a flow chart explaining a method of automatically detecting and highlighting a region, in which a moving image is displayed, and a method of controlling the details of the region, such as its contrast.

Referring to Figures 1 through 3, a user runs the highlighting program 21 in step 100 and then runs the moving image reproducing program 23 in step 110. The user can run a plurality of moving image reproducing programs at once.

After step 110, the OS 25 creates create messages for the highlighting program 21 and the moving image reproducing program 23 and informs the hooking program 27, such as Dynamic Link Library (DLL), of the creation of the create messages, in step 120.

The hooking program 27 hooks a window handle with respect to the moving image reproducing program 23 and transmits the hooked window handle to the highlighting program 21 in step 130.

The highlighting program 21 checks whether the received window handle is the same as the window handle for the moving image reproducing program 23 to be highlighted in step 140.

The highlighting program 21 detects a desired window handle for the class name among the names the window handles hold. For instance, the class name of the window handles for Win98, Windows Me, and for Windows 2000, which are all Microsoft Windows operating systems, is VideoRenderer, and the class name of the window handle for WinXp, which is also a Microsoft operating system, is WMPVideoWindow.

If it is determined in step 140 that the received window handle is not the same as the window handle of the moving image reproducing program 23, it proceeds to step 120. However, if the two window handles are the same, the highlighting program 21 calculates coordinates for the moving image window of a region, in which a moving image is to be reproduced, in step 150.

After step 150, the highlighting program 21 sends the moving image window coordinates to the monitor 30 via a predetermined interface in step 160.

As previously mentioned, any interface, such as a serial port, a parallel port, and an USB port, can be adopted to exchange moving image window coordinates and control values between the computer 20 and the monitor 30.

In step 170, the highlighting program 21 sends the MCU 33 control values for adjusting the R,G,B video signals, contrast, and sharpness of a highlighting region. Thereafter, the MCU 33 receives the moving image window coordinates, converts them into coordinates of the highlighting region, and outputs the control values to the control circuit 37.

In conclusion, a preferred embodiment of a method of transmitting a control signal to highlight a highlighting region according to the present invention is implemented by the highlighting program 21.

The highlighting program 21 outputs coordinates corresponding to a window handle for the moving image reproducing program 23 that is to be highlighted to the monitor 30, if the received window handle is the same as the window handle for the moving image reproducing program 23.

Further, the highlighting program 21 outputs control values for adjusting the R,G,B video signals, contrast, and sharpness of a highlighting region, which are produced by the coordinates of the highlighting region, to the monitor 30.

Preferably, the class name of the received window handle is compared with that of the moving image reproducing program 23 that is to be highlighted.

A method of highlighting the highlighting region 50, in which a moving image is reproduced, is performed on the monitor 30 in response to signals output from the highlighting program 21 in a highlight mode.

As described above, a method is disclosed which allows a highlighting region, in which a moving image is to be displayed, to be automatically detected and highlighted.

Also, with a method of controlling a highlighting region, a user can appreciate optimal moving image quality by controlling the R,G,B video signals, contrast, and sharpness of the highlighting region.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method for use in displaying moving images on a display device, comprising the steps of:
generating moving image data having moving image window coordinates, using a moving image reproduction program (23);
automatically detecting the moving image window coordinates using a highlighting program (21); and
automatically adjusting control values to generate a highlighting region (50) for display of the moving image data according to the detected moving image window coordinates.

2. The method of claim 1, wherein the automatic detecting step comprises:
receiving a first window handle for the moving image reproduction program (23);
comparing the first window handle with a second window handle for a moving image reproducing program (23) that is to be highlighted; and
outputting coordinates of the second window handle when the first and second window handles are the same.

3. The method of claim 2, wherein comparing the first and second window handles comprises comparing a class name of the first window handle with a class name of the second window handle.

4. The method of claim 2 or 3, wherein the automatically adjusting step comprises:
outputting control values for controlling colour (RGB), contrast, sharpness, or luminance of the highlighting region that is formed with coordinates of the second window handle, such that the highlighting region (50) is highlighted with respect to other regions (60) of a display device (40).

5. The method of any preceding claim, wherein the step of automatically adjusting comprises adjusting the control values of the highlighting region (50) to control values set according to the preference of a user for the highlighting region (50).

6. The method of any preceding claim, comprising setting control values of the highlighting region (50) according to a predetermined user preference, such that the set control values are used to automatically adjust the control values of the highlighting region (50).

7. A method of generating a control signal for use in displaying moving images, the method comprising:
receiving a first window handle for a moving image reproducing program (23);
comparing the first window handle with a second window handle for a moving image reproducing program (23) that is to be highlighted;
outputting coordinates of the second window handle when the first and second window handles are the same; and
outputting control values for controlling red (R), green (G), blue (B) video signals, contrast, or sharpness of a region that is formed with coordinates of the second window handle, to highlight a highlighting region (50) for reproduction of the moving images.

8. The method of claim 7, wherein comparing the first and second window handles comprises comparing a class name of the first window handle with a class name of the second window handle.

9. A method of highlighting a highlighting region (50), in which a moving image is to be reproduced, in a highlight mode, the method comprising:
receiving coordinates of a moving image corresponding to the highlighting region (50); and
receiving control values for each controlling R,G,B video signals, contrast or sharpness of the highlighting region (50) and controlling the R,G,B video signals, contrast or sharpness of the highlighting region (50).

10. A method of controlling the luminance of a highlighting region (50), the method comprising:
receiving moving image window coordinates corresponding to a highlighting region (50) in which a moving image is to be reproduced; and
receiving control values for automatically increasing luminance of the highlighting region (50) to be brighter than luminance of other regions.

11. A display device adapted to perform the method of claim 9 or 10.

12. A display device comprising:
a control circuit (37) for receiving moving image coordinates for setting a highlighting region (50), in which a moving image is to be reproduced, in a highlight mode, and control values that are each used to control R,G,B video signals, contrast, or sharpness; and
a cathode display tube (39) for displaying the R,G,B video signals adjusted in response to signals output from the control circuit.

13. A computing system for displaying moving images, comprising:
a moving image reproducing program (23) for reproducing moving images;
a highlighting program (21) for automatically determining moving image window coordinates corresponding to the moving images and for automatically adjusting control values to generate a highlighting region (50) for display of the moving images; and
a display device (30) having a control circuit (37) for displaying the moving images on a display (39) in a highlighting region (50) according to the adjusted control values.

14. The computer system of claim 13, comprising:
a hooking program (27) for hooking a window handle with respect to the moving image reproducing program (23) and sending the hooked window handle to the highlighting program (21);
the highlighting program (21) for comparing the hooked window handle with respect to a predetermined window handle for a moving image reproducing program that is to be highlighted, and outputting coordinates of the second window handle when the hooked window handle and the predetermined window handle are the same.

15. The method of claim 14, wherein the highlighting program (21) compares a class name of the hooked window handle with a class name of the predetermined window handle.

16. A computer-readable recording medium comprising computer-implementable instructions for performing the method of any of claims 1 to 12.

17. A computer program arranged to perform the method of any of claims 1 to 12.
